# EUROPEAN PATENT SPECIFICATION

(11) **EP 2 514 083 B1**
(45) Date of publication and mention of the grant of the patent: **13.06.2018**
(21) Application number: 10798286.0
(22) Date of filing: 13.12.2010
(51) Int. Cl.: H02M 1/42, H02J 9/06

(54) **PFC WITH REDUCED PIN NUMBER REQUIREMENTS FOR A CONTROL IC**
PFC MIT VERRINGERTEN PIN-ANFORDERUNGEN FÜR EINE INTEGRIERTE STEUERSCHALTUNG
CIRCUIT DE CORRECTION DU FACTEUR DE PUISSANCE EXIGEANT MOINS DE BROCHES POUR UN CIRCUIT INTÉGRÉ DE COMMANDE

(30) Priority: 15.12.2009 DE 102009054692
(43) Date of publication of application: 24.10.2012
(73) Proprietor: Tridonic UK Limited, Hampshire RG24 8LB (GB)
(72) Inventor: KELLY, Jamie, Tyne and Wear NE29 8AH (GB)
(74) Representative: Rupp, Christian
(86) International application number: PCT/EP2010/069477
(87) International publication number: WO 2011/073124

(56) References cited:
- EP-A1- 1 603 219
- US-B1- 6 304 465

## Description

The present invention relates in general to the field of power factor correction circuits (PFCs) having a switch clocked by an integrated circuit (IC), such as e.g. an ASIC or a Microcontroller.

Correction Circuits are known in the prior art for producing a stabilized (preferably controlled) DC output voltage based e.g. on a supplied rectified AC mains voltage, wherein the PFC is actively controlled by clocking a switch of the PFC such that ideally the PFC appears as an Ohmic load to the mains supply voltage.

Again, typically, the actively controlled PFC comprises a clocked switch, which switch is controlled by a typically integrated control circuitry, such as for example an ASIC. The ASIC controls the switch by evaluating different feedback signals. Typical feedback signals are:
- the input voltage,
- the current through the switch,
- the zero crossing of the discharge current of the inductor, and
- the output voltage to be controlled.

Each of the above cited feedback signals as well as the control signal for the switch (e.g. the gate signal for a FED) occupies a pin of an integrated control circuitry.

In the past there have been several attempts to reduce the required numbers of pins for the control IC for a PFC.

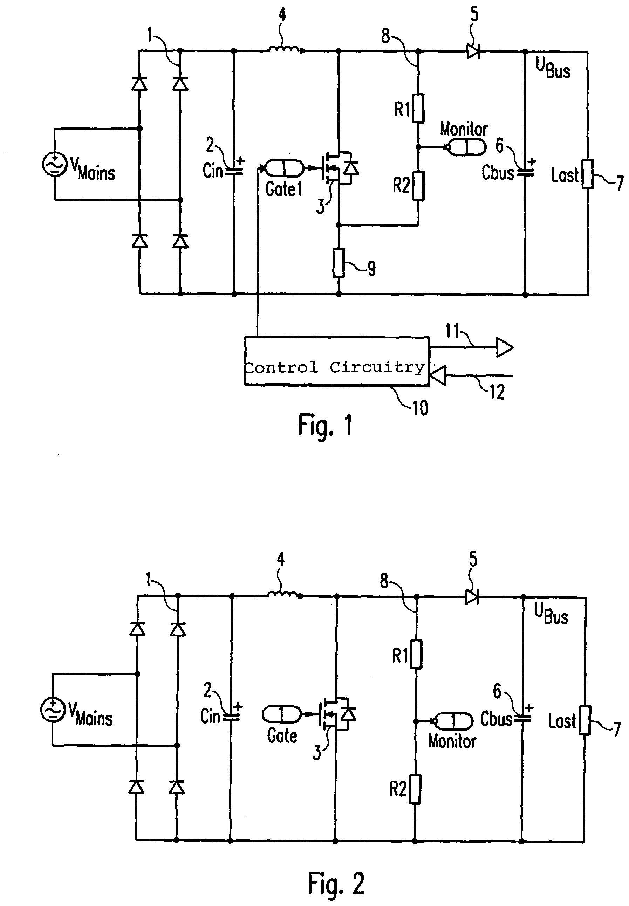

Figure 1 shows an example of the PCF with reduced pin number requirements for the associated control IC. This example is shown in the German patent application DE 10 2009 034 349.

As it is shown in Figure 1 an AC mains supply voltage is rectified via an AC/DC converter 1. A capacitor 2 may be provided to stabilize the input voltage the rectified input voltage and to reduce the ripple thereof.

When the switch 3 is its conducting state, as controlled via the control signal gate 1 coming from a control circuitry 10, an inductor 4 is charged.

The control circuitry 10 can issue further control signals 11, e.g. for a DC/DC or DC/AC (e.g. half bridge converter for frequency dimming) stage supplied with the output DC voltage of the PFC.

The control circuitry 10 can also be supplied with additional feedback signals 12 from following stages or from the lighting means.

When the switch 3 controlled by the signal gate 1 is in its not-conducting state, the energized conductor 4 is discharged over a diode 5 and the discharge current from the inductor 4 feeds a storage capacitor 6. The stabilized and control DC voltage at the capacitor 6 is a supply voltage which can either directly supply a load 7, or, as it is often the case in lighting applications, can be used to be supplied to a further DC/DC or DC/AC converter stage, wherein the output (DC or AC) of the converter stage is then fed to the load such as for example lighting means (LEDs, OLEDs, discharge lamps,...).

As shown in Figure 1 this circuitry only requires a single feedback signal pin for the associated integrated control circuitry, which is a feedback signal monitor 1. The feedback signal monitor 1 is tapped off a voltage divider 8 comprising resistors R1, R2, wherein the voltage divider 8 is connected in parallel to the switch 3.

In addition, a shunt 9 is connected in series to the parallel connection of the switch 3 and voltage divider 8. Although the circuitry of Figure 1 is only a reduced pin number requirement for the associated integrated control circuitry, it suffers from the disadvantage that the voltage (mains voltage or rectified mains voltage) can not be measured or evaluated. This is a disadvantage especially in cases, where the detection of the input voltage is used to change the mode of operation of the load (lighting means), as it is typically the case with emergency lighting units which ignite or change the operation mode of associated lighting means depending on the presence of an AC voltage, no supply voltage or a DC supply voltage.

EP 1 603 219 A1 discloses a power factor correction circuit in which the measurement connector is arranged in parallel to the transistor/switch and is only connected by the coil to the power grid input. As the coil with its winding is an inductive component with a current/voltage characteristic and which introduces a phase shift, there exists no direct connection over the ohmic resistor of the coil

It is the object of the invention to propose a PFC topology which allows the detection of the supply voltage of the PFC all by keeping the necessary pin number for a control IC low.

This object is achieved by means of the independent claim. The dependent claims develop further the central idea of the invention.

According to the invention a power factor correction circuit PFC is proposed,
comprising an inductor which is cyclically charged on the basis of a supply voltage and discharged by operating a switch,
the switch being controlled by a control circuitry,
the control circuitry being designed for evaluating the supply voltage of the PFC on the basis of a feedback signal,
the PFC circuit furthermore comprising a diode for supplying a discharge current from the inductor to the output of the PFC circuit,
wherein the feedback signal for the control circuitry is tapped off from a voltage divider, which voltage divider is connected in parallel to the switch,
characterized in that
the voltage divider is connected to the supply side and the output side of the inductor, either respectively through a decoupling diode or by means of a resistor connected between the input side of the inductor and the midpoint of the voltage divider.

A shunt may be connected in series to the switch and the voltage divider is connected between the switch and the shunt.

An additional resistor may be connected between the resistors of the voltage divider and the supply side of the inductor.

The control circuitry may be designed to evaluate, based on the feedback signal, the supply voltage, which preferably is a mains voltage, in time periods when the switch is in the conducting state, and the voltage at the output of the PFC in time periods when the switch is in the non-conducting state.

In time periods when the switch is in the conducting state, in addition a contribution of the increasing current through the switch can be evaluated.

The control circuitry may be designed to assess the supply voltage of the PFC, based on the feedback signal, in time period when the control circuitry is not clocking the switch.

The control circuitry may be designed to assess the supply voltage of the PFC, based on the feedback signal, in order to detect an emergency lighting situation and to operate lighting means in an emergency mode.

The control circuitry may be designed to assess the supply voltage of the PFC, based on the feedback signal, in order to detect the presence of an AC or DC supply voltage and to operate lighting means depending on the a detected AC or DC supply mode.

The control circuitry may be designed to assess an AC supply voltage of the PFC or a rectified version thereof, based on the feedback signal, in order to increase the on-time of the switch during zero-crossings of the AC supply voltage.

The control circuitry may be designed to assess the supply voltage of the PFC in order to adjust the maximum on-tome allowed for the switch depending on the amplitude of the supply voltage.

The control circuitry may be provided with an external or internal AD converter for the feedback signal in order to digitally evaluate the feedback signal.

The control circuitry may be designed to detect the periodicity of the voltage oscillations after the discharge current of the inductor has performed its first zero-crossing, and control the switching-on of the switch depending on the detected periodicity.

The control circuitry may comprise a ASIC, a microcontroller or a hybrid thereof and may implement a digital control algorithm.

The invention also provides an operating device for operating a light source, being provided with a PFC as explained above.

The PFC may generate a controlled DC voltage, which is used as a supply voltage of a DC/DC or DC/AC converter stage of the operating device.

The operating may be an emergency operating device igniting the supplied lighting means if an emergency situation is detected, e.g. based on an evaluation of the supply voltage of the PFC.

The invention also relates to an operating device for operating a light source, being provided with a PFC as defined above. The PFC thereby may be designed to generate a controlled DC voltage, which is used as a supply voltage of a DC/DC or DC/AC converter stage of the operating device, wherein the DC/DC or DC/AC converter stage drives lighting means, such as e.g. discharge lamps, LEDs or OLEDs.

The operating may be an emergency operating device igniting the supplied lighting means if an emergency situation is detected, e.g. based on an evaluation of the supply voltage of the PFC.

Further features, advantages and objects of the present invention will now be explained referring to the figures of the enclosed drawing, taken in conjunction with the detailed explanation of preferred embodiments.
Figure 1 shows a PFC circuitry known from the DE102009034349,
Figure 2 shows a 1^{st} embodiment of the invention,
Figure 3 shows a 2^{nd} embodiment of the invention,
Figure 4 shows a 4^{th} embodiment of the invention
Figure 5 shows an example for a monitor signal of the 4^{th} embodiment,
Figure 6 shows a 5^{th} embodiment of the invention, and
Figure 7 shows an example for a monitor signal of the 5^{th} embodiment.

Figure 2 shows a circuitry which is a further simplified circuitry in comparison to the circuitry of Figure 1. In contrast to the circuitry of Figure 1, no shunt (9 in Figure 1) is present which reduces the energy consumption of the circuitry. Obviously in the embodiment of Figure 2 the current through the switch 3 is no longer measured when the switch 3 is controlled in its conducting (ON) state. Thus no direct over-current protection for the switch 3 is implemented, but it is still possible to implement a reduction of the bus voltage U_{Bus} for lower mains voltages Vₘₐᵢₙₛ. Reducing the bus voltage (by reducing the on-time Tₒₙ for the FET switch 3) when the mains voltage reduces, reduces the power and prevents an overheating of the FET switch 3. According to the embodiment of Figure 2 this over-current protection function, however, is implemented indirectly by limiting the on-time Tₒₙ for the FET switch 3. The maximum allowable on-time Tₒₙ for the FET switch 3 is the shorter the lower the RMS value of the mains voltage Vₘₐᵢₙₛ. Otherwise there would be the risk that the PFC's control implemented in the control circuitry 10 would attempt to compensate the lower RMS value of the mains voltage by increasing the on-time Tₒₙ for the FET switch 3 in order to keep the bus voltage on a constant level, which could cause an over-current situation.

(Note that the control circuitry 10 in Figure 1 can be used also in all embodiments of the invention).

Having a lower RMS value it is permissible to have a longer T_{ON}, as the change in inductor current is proportional to the product of V_{MAINS} and T_{ON}. According to the invention T_{ON} varies proportional to 1/ V_{MAINS} up to an upper limit where T_{ON} would remain at T_{ON_MAX}. The limitation of T_{ON} at T_{ON_MAX} applies a limit to the input power as V_{MAINS} continues to decrease (assuming that the inductor is not saturating).

If desired, the reduced bus voltage in case of lower mains voltage can then be compensated in a following DC/DC or DC/AC stage in order continue to supply the lighting means with constant power. One example is the adaptation of the switching frequency of a half bridge converter with following resonance circuit.

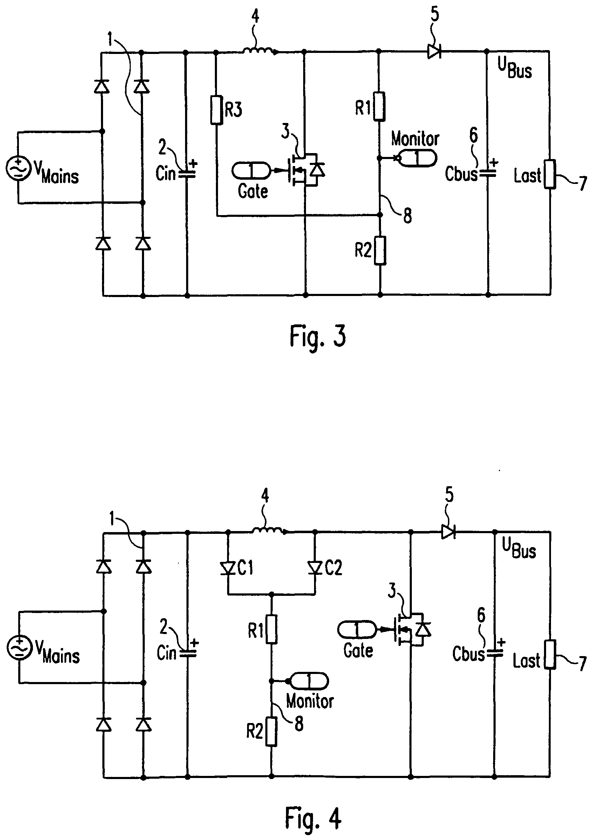

Figure 3 now shows an improved embodiment, which enables the measurement of the input voltage.

As can be seen from Fig. 3, again a voltage divider 8 comprising resistors R1, R2 is connected with the inductor 4 and the diode 5 and in parallel with the switch 3. In addition, a further (third) resistor R3 is connected between the input side of the inductor 4 and the midpoint of the voltage divider 8, i.e. between the resistors R1, R2 of the voltage divider 8.

Again, in the embodiment of fig. 3 no direct measurement of the current through the FET switch 3 is possible, which would have the advantage of providing a limiting current protection the current through switch 3 in the event of a separation of the inductor 4, which can be caused by component tolerances or the control circuitry setting the on-time of the switch 3 to the maximum value while the mains voltage V ₘₐᵢₙₛ is high. Therefore, as a protection measure, also in the embodiment of fig. 3, comparable to the embodiment of fig. 2, the maximum on-time for the FET switch 3 may be adjusted as a function of the (detected) mains voltage. Thus, the control circuitry is designed to evaluate the mains voltage V ₘₐᵢₙₛ and to adjust the maximum on-time of the switch 3 as a function of the mains voltage. The lower the mains voltage, the lower is the maximum allowable on-time of the switch 3.

The additional resistor R3 functions as a path for measuring the supply voltage.

When the inductor 4 is not magnetized, the tap-off point of the voltage divider 8 for the inductor 4 and the diode 5, i.e. the supply of the resistor R1 is floating and will therefore give any contribution to the measurement signal monitor 1 in the voltage divider 8. Therefore, when the inductor is not magnetized the voltage divider R2/R2 will enable the measurement of the supply voltage via the feedback signal monitor.

At the time of switching-on of the switch 3, the Ohmic resistance of the switch 3 is low (Ohmic resistance RDSon) and via the voltage divider R1/R2 indirectly the current through the switch 3 can be measured. Thus, at the time of switching-on of the switch 3, the low Ohmic resistor R3 will not give any contribution and the mains voltage only will be measured through the voltage divider R3/R2.

Otherwise, even if resistance values of the resistors R1 and R3 are comparable, the mains voltage can be taken as constant, as the changes of the mains voltages are much smaller in comparison to the switching period of the PFC. Thus, when measuring the bus voltage and the mains voltage contribution while the switch is not conducting, a mains voltage value sampled beforehand (switch conducting) can be taken as a constant DC offset.

After controlling the switch 3 in its non-conducting state, the diode 5 will be conducting and the bus voltage U_{BUS} can be measured via the feedback monitor signal 1, again, until the inductor 4 is completely de-energized and thus output side of the inductor 4 towards the diode 5 is floating and not giving a contribution to the measurement at the voltage divider 8.

The measurement of the mains supply voltage according to fig. 3 has the advantage that also a measurement of the supply voltage is possible even if PFC shown in fig. 3 is not actively clocked, i.e. the switch 3 is permanently in its off-state as controlled by the control circuitry. In this state the control circuitry is still able to evaluate the supply voltage such that e.g. the failure of the mains supply voltage can be detected or, as it is typically used for emergency lightings, the change from an ac voltage to a dc voltage is detected.

Fig. 4 shows a still further embodiment of the present invention. As can be seen in fig. 4, the voltage divider 8 having the resistors R1, R2 is connected to the input side and the output side of the inductor 4, respectively, via de-coupling diodes C1, C2.

In different time periods (i.e. states of the PFC) either the de-coupling diode C1 or the de-coupling diode C2 gives a contribution to the measurements of the voltage divider 8. Only one resistor chain R1, R2 is required, such that there is no extra power loss (in comparison to the additional resistor R3 in the embodiment of fig. 3).

As during the time periods when the switch 3 is closed only the bus voltage, but not the mains voltage makes a contribution, there's no DC offset from the mains voltage contribution which brings about advantages as to the dynamic range of a following A/D converter. As the RMS of the mains voltage (present at the capacitor 2) is in the order of the bus voltage, the dynamic range is roughly doubled when surpressing the DC offset of the mains voltage contribution.

While the FET switch 3 is in its on-state, the monitor signal reflects the input voltage, while when the switch is in its off-state, the monitor signal reflects the drain voltage of the switch (i.e. the bus voltage U_{BUS}) as long as it is higher than the mains voltage, i.e. as long as the inductor produces a demagnetizing current.

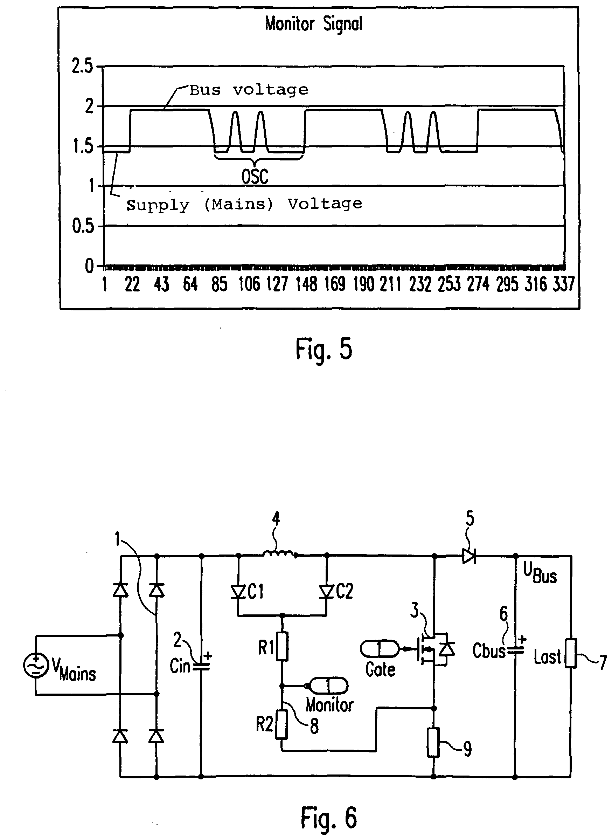

Fig. 5 shows a typical monitor signal tapped off the voltage divider 8. Fig. 5 shows oscillations of the monitor signal after the demagnetizing of the inductor 4, i.e. after the inductor de-charging current has performed its first zero crossing.

The oscillations are "rectified" by the diodes C1, C2. According to the invention, using the mains voltage measurement, the control circuitry evaluates the oscillations in order to detect the periodicity thereof and correspondingly control a zero current switching of the switch 3. Knowing the periodicity, the control circuitry can close the switch 3 after a computed delay (the delay corresponding approx. to half the time difference between two rectified peaks of the monitor signal) after an oscillation peak, such that the switch is brought into its conducting state exactly at a zero-crossing.

The evaluation of the oscillation such leads to a fine-tuning of the zero-current switching of the switch 3.

Note that the oscillation of the inductor current after the demagnetization of the inductor can also be measured by other signals than the monitor signal tapped-off according to the present embodiments.

The delay can be computed adaptively, especially by detecting the periodicity after every zero crossing of the de-magnetizing current, or only once for several or even all following switching on controls.

Fig. 6 shows a further development of the embodiment of fig. 4, wherein additional shunt 9 is provided in series to the FET switch 3 such that the current through the switch 3 can be measured while the switch 3 is controlled in its on-state.

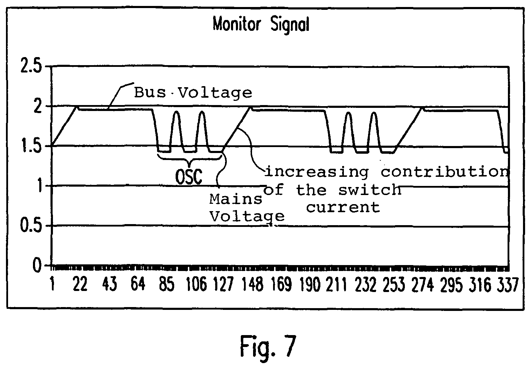

Still, the supply voltage can be measured immediately after this FET switch is in its on-state, as - see fig. 7 - the contribution of the current increases continuously from zero.

Again, the oscillation of the signal can be evaluated, as explained with reference to figure 5.

When making e.g. two measurement samples during the linearly increasing current contribution phase, the control circuitry can make a backwards extrapolation in time in order to compute the pure mains voltage contribution at t=0. Knowing the pure mains voltage contribution, then the current contribution without the mains DC offset can be computed, e.g. for a over-current protection or to determine the switching off time point for the switch when the current reaches a given threshold value.

## Claims

1. A power factor correction circuit PFC,
comprising an inductor (4) which is cyclically charged on the basis of a supply voltage and discharged by operating a switch (3),
the switch (3) being controlled by a control circuitry (10),
the control circuitry (10) being designed for evaluating the supply voltage of the PFC on the basis of a feedback signal,
the PFC circuit furthermore comprising a diode (5) for supplying a discharge current from the inductor (4) to the output of the PFC circuit,
wherein the feedback signal for the control circuitry is tapped off from a voltage divider (R1, R2), which voltage divider (R1, R2) is connected in parallel to the switch (3),
**characterized in that**
the voltage divider (R1, R2) is connected to the supply side and the output side of the inductor (4), either respectively through a decoupling diode (C1, C2) or by means of a resistor (R3) connected between the input side of the inductor (4) and the midpoint (8) of the voltage divider (R1, R2).

2. The power factor correction circuit according to claim 1,
wherein a shunt is connected in series to the switch and the voltage divider is connected between the switch and the shunt.

3. The power factor correction circuit according to claim 1,
wherein an additional resistor is connected between the resistors of the voltage divider and the supply side of the inductor.

4. The power factor correction circuit according to any of the preceding claims,
wherein the control circuitry is designed to evaluate, based on the feedback signal, the supply voltage, which preferably is a mains voltage, in time periods when the switch is in the conducting state, and the voltage at the output of the PFC in time periods when the switch is in the non-conducting state.

5. The power factor correction circuit according to claim 8,
wherein in time periods when the switch is in the conducting state, in addition a contribution of the increasing current through the switch is evaluated.

6. The power factor correction circuit according to any of the preceding claims,
wherein the control circuitry is designed to assess the supply voltage of the PFC, based on the feedback signal, in time period when the control circuitry is not clocking the switch.

7. The power factor correction circuit according to any of the preceding claims,
wherein the control circuitry is designed to assess the supply voltage of the PFC, based on the feedback signal, in order to detect an emergency lighting situation and to operate lighting means in an emergency mode.

8. The power factor correction circuit according to any of the preceding claims,
wherein the control circuitry is designed to assess the supply voltage of the PFC, based on the feedback signal, in order to detect the presence of an AC or DC supply voltage and to operate lighting means depending on the a detected AC or DC supply mode.

9. The power factor correction circuit according to any of the preceding claims,
wherein the control circuitry is designed to assess an AC supply voltage of the PFC or a rectified version thereof, based on the feedback signal, in order to increase the on-time of the switch during zero-crossings of the AC supply voltage.

10. The power factor correction circuit according to any of the preceding claims,
wherein the control circuitry is designed to assess the supply voltage of the PFC in order to adjust the maximum on-time allowed for the switch depending on the amplitude of the supply voltage.

11. The power factor correction circuit according to any of the preceding claims,
wherein the control circuitry is provided with an external or internal AD converter for the feedback signal in order to digitally evaluate the feedback signal.

12. The power factor correction circuit according to any of the preceding claims,
wherein the control circuitry is designed to detect the periodicity of the voltage oscillations after the discharge current of the inductor has performed its first zero-crossing, and control the switching-on of the switch depending on the detected periodicity.

13. The power factor correction circuit according to any of the preceding claims,
wherein the control circuitry comprises a ASIC, a microcontroller or a hybrid thereof.

14. An operating device for operating a light source, being provided with a PFC according to any of the preceding claims.

15. The operating device according to claim 14,
wherein the PFC generates a controlled DC voltage, which is used as a supply voltage of a DC/DC or DC/AC converter stage of the operating device.

16. The operating device according to claim 14 or 15,
which is an emergency operating device igniting the supplied lighting means if an emergency situation is detected, e.g. based on an evaluation of the supply voltage of the PFC.

## Patentansprüche

1. Leistungsfaktor-Korrekturschaltung PFC, umfassend einen Induktor (4), der aufgrund einer Versorgungsspannung zyklisch geladen und durch das Betätigen eines Schalters (3) entladen wird,
wobei der Schalter (3) durch einen Regelkreis (10) gesteuert wird,
wobei der Regelkreis (10) zur Bewertung der Versorgungsspannung der PFC aufgrund eines Rückkopplungssignals ausgelegt ist,
wobei die PFC ferner eine Diode (5) zur Zuführung eines Entladestroms aus dem Induktor (4) zum Ausgang der PFC umfasst,
wobei das Rückkopplungssignal für den Regelkreis von einem Spannungsteiler (R1, R2) abgezapft wird, wobei der Spannungsteiler (R1, R2) mit dem Schalter (3) parallel geschaltet ist, **dadurch gekennzeichnet, dass**
der Spannungsteiler (R1, R2) an die Versorgungsseite und die Ausgangsseite des Induktors (4), entweder über eine Entkopplungsdiode (C1, C2) oder einen Widerstand (R3), angeschlossen ist, der zwischen der Eingangsseite des Induktors (4) und dem Mittelpunkt (8) des Spannungsteilers (R1, R2) geschaltet ist.

2. Leistungsfaktor-Korrekturschaltung nach Anspruch 1,
wobei ein Shunt mit dem Schalter reihengeschaltet ist und der Spannungsteiler zwischen Schalter und Shunt geschaltet ist.

3. Leistungsfaktor-Korrekturschaltung nach Anspruch 1,
wobei ein zusätzlicher Widerstand zwischen den Widerständen des Spannungsteilers und der Versorgungsseite des Induktors geschaltet ist.

4. Leistungsfaktor-Korrekturschaltung nach einem der vorstehenden Ansprüche,
wobei der Regelkreis zur Bewertung der Versorgungsspannung aufgrund des Rückkopplungssignals ausgelegt ist, wobei die Versorgungsspannung vorzugsweise eine Netzspannung ist, wenn sich der Schalter im leitenden Zustand befindet, und zur Bewertung der Spannung am Ausgang der PFC ausgelegt ist, wenn sich der Schalter im nicht leitenden Zustand befindet.

5. Leistungsfaktor-Korrekturschaltung nach Anspruch 8,
wobei, wenn der Schalter sich im leitenden Zustand befindet, außerdem ein Beitrag des steigenden Stroms durch den Schalter bewertet wird.

6. Leistungsfaktor-Korrekturschaltung nach einem der vorstehenden Ansprüche,
wobei der Regelkreis zur Bewertung der Versorgungsspannung der PFC aufgrund des Rückkopplungssignals ausgelegt ist, wenn der Regelkreis den Schalter nicht taktet.

7. Leistungsfaktor-Korrekturschaltung nach einem der vorstehenden Ansprüche,
wobei der Regelkreis zur Bewertung der Versorgungsspannung der PFC aufgrund des Rückkopplungssignals ausgelegt ist, um eine Notbeleuchtungssituation zu erkennen und Beleuchtungsmittel im Notfallbetrieb zu betreiben.

8. Leistungsfaktor-Korrekturschaltung nach einem der vorstehenden Ansprüche,
wobei der Regelkreis zur Bewertung der Versorgungsspannung der PFC aufgrund des Rückkopplungssignals ausgelegt ist, um das Vorhandensein einer Versorgungswechsel- oder - gleichspannung zu erkennen und Beleuchtungsmittel je nach dem erkannten Gleich- oder Wechselspannungsversorgungsmodus zu betreiben.

9. Leistungsfaktor-Korrekturschaltung nach einem der vorstehenden Ansprüche,
wobei der Regelkreis zur Bewertung einer Versorgungswechselspannung der PFC oder einer gleichgerichteten Version davon aufgrund des Rückkopplungssignals ausgelegt ist, um die Einschaltzeit des Schalters bei Nulldurchgängen der Versorgungswechselspannung zu erhöhen.

10. Leistungsfaktor-Korrekturschaltung nach einem der vorstehenden Ansprüche,
wobei der Regelkreis zur Bewertung der Versorgungsspannung der PFC ausgelegt ist, um die maximal zulässige Einschaltzeit des Schalters je nach der Amplitude der Versorgungsspannung einzustellen.

11. Leistungsfaktor-Korrekturschaltung nach einem der vorstehenden Ansprüche,
wobei der Regelkreis mit einem externen oder internen AD-Wandler für das Rückkopplungssignal versehen ist, um das Rückkopplungssignals digital zu bewerten.

12. Leistungsfaktor-Korrekturschaltung nach einem der vorstehenden Ansprüche,
wobei der Regelkreis zur Erkennung der Periodizität der Spannungsschwankungen ausgelegt ist, nachdem der Entladestrom des Induktors den ersten Nulldurchgang vollzogen hat, und zur Steuerung des Einschaltens des Schalters je nach der erkannten Periodizität ausgelegt ist.

13. Leistungsfaktor-Korrekturschaltung nach einem der vorstehenden Ansprüche,
wobei der Regelkreis eine ASIC, einen Mikrocontroller oder eine Kombination davon umfasst.

14. Betriebsvorrichtung zum Betreiben einer Lichtquelle, die mit einer PFC nach einem der vorstehenden Ansprüche ausgestattet ist.

15. Vorrichtung nach Anspruch 14, wobei die PFC eine geregelte Gleichspannung erzeugt,
die als Versorgungsspannung einer DC/DC- oder DC/AC-Wandlerstufe der Vorrichtung verwendet wird.

16. Vorrichtung nach Anspruch 14 oder 15,
bei der es sich um eine Notbetriebsvorrichtung handelt, die die vorgesehenen Beleuchtungsmittel zündet, wenn ein Notfall erkannt wird, z.B. aufgrund einer Bewertung der Versorgungsspannung der PFC.

## Revendications

1. Circuit de correction de facteur de puissance, PFC, comprenant une inductance (4) qui est chargée cycliquement sur la base d'une tension d'alimentation, et déchargée en actionnant un commutateur (3) ;
le commutateur (3) étant commandé par un montage de circuits de commande (10) ;
le montage de circuits de commande (10) étant conçu de manière à évaluer la tension d'alimentation du circuit de correction PFC sur la base d'un signal de rétroaction ;
le circuit de correction PFC comprenant en outre une diode (5) destinée à fournir un courant de décharge, de l'inductance (4) à la sortie du circuit de correction PFC ;
dans lequel le signal de rétroaction pour le montage de circuits de commande est prélevé à partir d'un réducteur de tension (R1, R2), lequel réducteur de tension (R1, R2) est connecté en parallèle au commutateur (3) ;
**caractérisé en ce que :**
le réducteur de tension (R1, R2) est connecté au côté alimentation et au côté sortie de l'inductance (4), soit, respectivement, à travers une diode de découplage (C1, C2), soit au moyen d'une résistance (R3) connectée entre le côté entrée de l'inductance (4) et le point médian (8) du réducteur de tension (R1, R2).

2. Circuit de correction de facteur de puissance selon la revendication 1,
dans lequel un shunt est connecté en série au commutateur et le réducteur de tension est connecté entre le commutateur et le shunt.

3. Circuit de correction de facteur de puissance selon la revendication 1,
dans lequel une résistance supplémentaire est connectée entre les résistances du réducteur de tension et le côté alimentation de l'inductance.

4. Circuit de correction de facteur de puissance selon l'une quelconque des revendications précédentes,
dans lequel le montage de circuits de commande est conçu de manière à évaluer, sur la base du signal de rétroaction, la tension d'alimentation, laquelle est de préférence une tension de secteur, au cours de périodes de temps où le commutateur est dans l'état conducteur, et la tension à la sortie du circuit de correction PFC au cours de périodes de temps où le commutateur est dans l'état non conducteur.

5. Circuit de correction de facteur de puissance selon la revendication 8,
dans lequel, au cours de périodes de temps où le commutateur est dans l'état conducteur, en outre, une contribution du courant croissant à travers le commutateur est évaluée.

6. Circuit de correction de facteur de puissance selon l'une quelconque des revendications précédentes,
dans lequel le montage de circuits de commande est conçu de manière à évaluer la tension d'alimentation du circuit de correction PFC, sur la base du signal de rétroaction, au cours d'une période de temps où le montage de circuits de commande ne cadence pas le commutateur.

7. Circuit de correction de facteur de puissance selon l'une quelconque des revendications précédentes,
dans lequel le montage de circuits de commande est conçu de manière à évaluer la tension d'alimentation du circuit de correction PFC, sur la base du signal de rétroaction, afin de détecter une situation d'éclairage d'urgence et d'exploiter un moyen d'éclairage dans un mode d'urgence.

8. Circuit de correction de facteur de puissance selon l'une quelconque des revendications précédentes,
dans lequel le montage de circuits de commande est conçu de manière à évaluer la tension d'alimentation du circuit de correction PFC, sur la base du signal de rétroaction, afin de détecter la présence d'une tension d'alimentation en courant alternatif ou en courant continu, et d'exploiter un moyen d'éclairage en fonction d'un mode d'alimentation en courant alternatif ou en courant continu détecté.

9. Circuit de correction de facteur de puissance selon l'une quelconque des revendications précédentes,
dans lequel le montage de circuits de commande est conçu de manière à évaluer une tension d'alimentation en courant alternatif du circuit de correction PFC, ou une version redressée connexe, sur la base du signal de rétroaction, afin d'augmenter le temps d'enclenchement du commutateur au cours de passages par zéro de la tension d'alimentation en courant alternatif.

10. Circuit de correction de facteur de puissance selon l'une quelconque des revendications précédentes,
dans lequel le montage de circuits de commande est conçu de manière à évaluer la tension d'alimentation du circuit de correction PFC afin d'ajuster le temps d'enclenchement maximum autorisé pour le commutateur en fonction de l'amplitude de la tension d'alimentation.

11. Circuit de correction de facteur de puissance selon l'une quelconque des revendications précédentes,
dans lequel le montage de circuits de commande est doté d'un convertisseur analogique-numérique externe ou interne pour le signal de rétroaction, afin d'évaluer numériquement le signal de rétroaction.

12. Circuit de correction de facteur de puissance selon l'une quelconque des revendications précédentes,
dans lequel le montage de circuits de commande est conçu de manière à détecter la périodicité des oscillations de tension après que le courant de décharge de l'inductance a mis en oeuvre son premier passage par zéro, et à commander la mise sous tension du commutateur en fonction de la périodicité détectée.

13. Circuit de correction de facteur de puissance selon l'une quelconque des revendications précédentes,
dans lequel le montage de circuits de commande comprend un circuit ASIC, un microcontrôleur ou un montage hybride connexe.

14. Dispositif d'exploitation destiné à exploiter une source de lumière, doté d'un circuit de correction PFC selon l'une quelconque des revendications précédentes.

15. Dispositif d'exploitation selon la revendication 14, dans lequel le circuit de correction PFC génère une tension en courant continu commandée, laquelle est utilisée en tant qu'une tension d'alimentation d'un étage de convertisseur continu/continu ou continu/alternatif du dispositif d'exploitation.

16. Dispositif d'exploitation selon la revendication 14 ou 15, lequel est un dispositif d'exploitation d'urgence allumant le moyen d'éclairage fourni si une situation d'urgence est détectée, par exemple, sur la base d'une évaluation de la tension d'alimentation du circuit de correction PFC.
